Europäisches Patentamt

**European Patent Office**

**Office européen des brevets**

(11) Publication number: **0 010 448**
**A2**

# EUROPEAN PATENT APPLICATION

(21) Application number: **79302306.0**

(22) Date of filing: **23.10.79**

(51) Int. Cl.³: **G 07 F 13/06**
**A 47 J 31/40**

(30) Priority: **25.10.78 GB 4188678**
**12.10.79 GB 7935466**

(43) Date of publication of application:
**30.04.80 Bulletin 80/9**

(84) Designated Contracting States:
**AT BE CH DE FR IT LU NL SE**

(71) Applicant: **VGL INDUSTRIES LIMITED**
Piper House, 253/7 Burlington Road
New Malden, Surrey KT3 4NQ(GB)

(72) Inventor: **Gosden, Julian Kenneth**
13 Ashtead Common
Ashtead Surrey(GB)

(74) Representative: **Evans, David Charles et al,**
F.J. CLEVELAND & COMPANY 40-43, Chancery Lane
London, WC2A 1JQ(GB)

(54) Improvements in and relating to vending machines.

(57) The invention relates to a means for indicating the presence of ingredients to be dispensed in a vending machine and provides in a typical example a light source such as light emitting diode 22 and a sensor such as a phototransistor 23 which together define a light path 25 across the neck portion 34 to a suitable ingredient container 31. The ingredient container is secured to a dispensing nozzle assembly comprising a sleeve 44 carrying a dispensing nozzle 41 and an inner valve block 50 incorporating a valve member 60, the arrangement being such on the ingredient level falling below the light path 25 the incident light falling upon sensor 23 is increased thereby providing an indication that the ingredients are "sold out". In a particular embodiment of the invention the light source is an infra red emitter which may be presented using a micro processor unit thereby inducing a level of the emitter.

EP 0 010 448 A2

FIG.1

## DESCRIPTION

This invention relates to vending machines and has particular reference to an indicator for indicating the availability of ingredients in such a machine.

Vending machines, and particularly beverage vending machines typically include a number of containers, each of which contains a beverage forming/ingredient in a powder, particulate or syrup form. Thus, for example, a succession of containers may contain respectively tea, coffee, sugar, cream, chocolate and cocoa in powdered form and when a beverage is required the user operates the machine which dispenses into a cup, a measured charge of the required ingredient for example, coffee powder, sugar and cream, and then adds hot water to this powder mixture. The powdered ingredients are usually contained in plastics containers which are inverted in the vending machine and attached at their neck to a dispensing valve assembly.

Our copending Application No. 50976/76 cognate with Application No. 13851/77 describes and claims a disposable container dispenser assembly for a vending machine characterised by a container body adapted to contain ingredients to be dispensed and valve means to control the dispensing of said ingredients whereby the valve means is captive with the container body so that the assembly can be removed from its operative location in a machine for disposal as a single unit.

This has the advantage that the valve and ingredient container are effectively a single piece unit and ingredients are effectively sealed. These containers, when filled with ingredients together with their associated valve assembly are adapted to be inverted with a dispensing neck disposed downwardly and supported in a holder so that on operation of the dispensing vavle assembly the ingredients are dispensed downwardly. Such a vending machine will be referred to hereinafter as "a vending machine of the kind described".

According to the present invention, there is provided a vending machine of the kind described comprising a holder for supporting a container of ingredients for the dispensing thereof, valve actuator means carried by said holder and juxtaposed the container valve means for actuation thereof in response to a dispense signal, a light source carried by said holder upwardly of said valve actuating means, a photoelectric cell carried by said holder and adapted to receive light from said cell to define a light path adapted to be obturated by the ingredients of the container whereby when the container is substantially empty, the intensity of the light from the light source impinging on the photoelectric cell increased to indicate that all of the ingredient has been dispensed.

In one embodiment of the present invention, the infra red emitter may be pulsed using an m.p.u clock. This extends the life of the emitters. In a typical example a 10 m second pulse is applied to a diode in the emitter circuit to pulse the emitter.

In a further embodiment of the present invention, the microprocesser unit may incorporate clock means capable of generating an output and receiving an input in response thereto, said output being applied to a diode for pulsing said emitter, the detector serving to prime a trigger circuit depending on the detector state.

A portion of the container at least in the light path may be translucent or transparent. The light source may be a light emitting diode and the photoelectric cell may be a phototransistor. When the ingredients are opaque the phototransistor may be connected to a C-MOS gate. When the ingredients are translucent, as is the case for example with a syrup, the phototransistor may be connected to a reference circuit to effect a change in the voltage thereacross thus indicating a variation of the light intensity impinging upon the phototransistor.

In a particular embodiment of the present invention the holder may comprise a solenoid support juxtaposed the valve member having upwardly thereof a sleeve, the upper portion of which is chamfered to abut the neck shoulder of the container and to support the container in its operative configuration.

The upwardly extending sleeve may be provided with a light emitting diode in one wall adapted to direct a beam of light across the sleeve onto a diametrically opposite wall portion thereof, which diametrically opposite wall portion contains a phototransistor thereby defining a light path across the sleeve. The inverted container will ensure that the contents rests against the valve assembly preparatory for dispensing from the dispensing nozzle. As the level of ingredients falls below the axis of the light path the intensity of the light impinging upon the phototransistor may be increased to produce a voltage change which is sensed by an appropriate circuit and may provide a visual indicator such, for example, on a finger-board against the particular ingredient that the ingredient is "sold out".

Following is a description by way of example only and with reference to the accompanying informal drawings of a method of carrying the invention into effect.

In the drawings:-

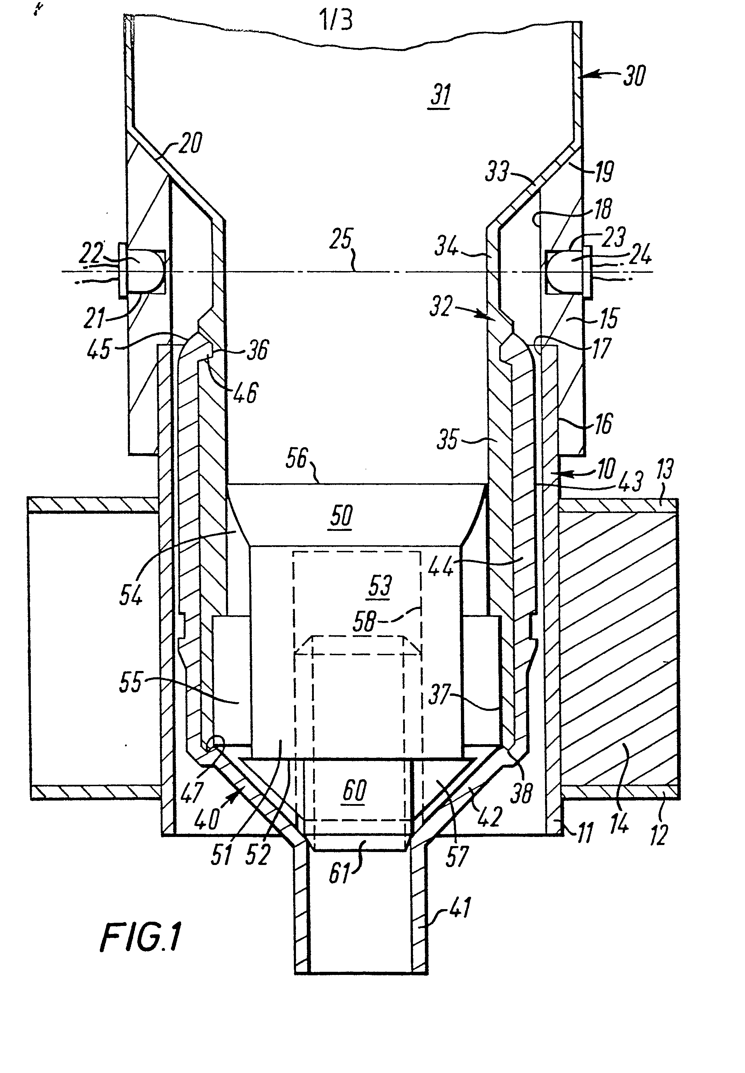

Figure 1 is a section through a dispensing head and support in accordance with the present invention;

Figure 2 is a circuit diagram of an embodiment of Figure 1;

Figure 3 is a circuit diagram for a second embodiment for use with the apparatus of Figure 1.

Figures 4 and 5 are circuit diagrams illustrating the use of the pulsed circuit in configuration with a microprocessor unit.

A vending machien has a plurality of container supports 10 each of which comprises a cylindrical sleeve 11 having disposed towards its lower end a lower annulus 12 extending from an outer surface of the sleeve 11 and an upper annulus 13 spaced upwardly of lower annulus 12. Annuli 12 and 13 each serving to define the extremities of a solenoid coil 14. Sleeve 11 carries in the upper portion thereof a cylindrical upper support 15 which is rebated at its lower end 16 to mate with sleeve 11 so that the inner surface 17 of sleeve 11 is substantially continuous with the inner surface 18 of upper support 15.

The upper extremity 19 of support 15 is provided with a chamfered, frusto-conical surface 20. Upper support 15 is formed of a substantially transparent material and is provided with a first blind bore 21 accommodating a light emitting diode 22 which is disposed to direct a light beam diametrically across upper support 15. The upper support 15 is further provided with a second blind bore 23 extending inwardly from an outer surface thereof which accommodates a phototransistor 24 adapted to receive a light beam from source 22. The light source 22 and the phototransistor 24 together

0010448

defining a light path 25 substantially dimetrically of upper support 15.

The container support 10 is generally constructed and arranged to support a container 30 together with an associated valve assembly, the container and valve assembly comprises a container body 31 which in the operative disposition has a downwardly disposed neck 32. The neck 32 is juxtaposed a sloping shoulder 33 which is adapted to abut and engage chamfered surface 20 to support the container in its operative disposition. The sloping shoulder 33 converges to first cylindrical neck portion 34 and an expanded cylindircal portion 35. The expanded portion 35 has an annular groove 36 spaced downwardly of the upper extremity of expanded portion 35 the inner surface of expanded portion 35 is rebated at the lower end 37 of the inner surface, the lower edge 38 being chamfered.

The neck 32 is adapted to carry a nozzle assembly 40 comprising dispensing nozzle 41, frusto-conical portion 42 and a substantially cylindrical sleeve portion 43. The upper part of cylindrical portion 43 is thickened at 44 and is cut into a plurality of axially extending, circumferentially spaced fingers extending upwardly and substantially over half the extent of cylindrical portion 43. Each finger terminates at its upper end in an outer curved portion 45 and an inward projection 46 the arrangement being such that the plurality of fingers together define a substantially annular inwardly directed bead.

Each projection 46 is adapted to snap into groove 36 in neck 32 so that the nozzle 40 is retained positively on neck 32 with the inner surface of expanded portion 35 od downwardly extending neck 32; the lower edge 38 being engaged with an annular groove 47 provided for mating engagement therewith.

The nozzle and neck together support and locate a valve block 50 formed of a substantially plastics material and comprising a block 51 having a generally lower wall 52 a pair of planar side walls 53 a pair of arcuate upper end walls 54 adapted to mate with the internal surface of expanded portion 35 and a lower arcuate end wall 55 adapted to be accommodated within lower rebate 37 of neck 32. The top of block 51 is chamfered to provide inclined top walls defining an edge 56. The lower wall 52 has a pair of diametrically opposed lugs 57 adapted to abut and engage with internal surface of frusto-conical portion 42 of the nozzle assembly 40 whereby the block 51 is located positively between the shoulder defined by lower rebate 37 of neck 32 and frusto-conical portion 42 of nozzle assembly 40. The lower wall is provided with a blind bore 58 extending upwardly of the block and substantially co-axial of the block nozzle and neck assembly and accommodates a ferromagnetic valve member for sliding movement therein. The valve member 60 is chamfered at its lower edge 61 to form a frusto-conical valve to cooperate with a seat on the inner surface of nozzle assembly 40 defined by the junction between the dispensing nozzle 41 and the frusto-conical portion 42, the arrangement being such that the valve is disposed generally within the sphere of influence of any magnetic field generated by solenoid 14.

In operation, the container and valve assembly 30 is filled with a powder to be dispensed. On inverting the container and valve assembly and insertion in the holder so the sloping shoulder 33 of the container and valve assembly 30 abuts frusto-conical surface 20 of upper support 15. The ferro-magnetic valve member 60 is disposed in juxtaposition with solenoid 14. In this position, the contents of the container is moved downwardly under gravity to fill the spaced defined by the neck and around the valve member 60. In this attitude the contents obturate the light path 25 and prevent light from LED 22 being received by phototransistor 24. On receipt of a dispense signal the vending machine actuates solenoid 14 with an AC current to vibrate ferromagnetic valve member 60 in its seat and to allow powder to be dispensed from nozzle 41 to a waiting container. At the end of the dispense stage, the solenoid 14 is deenergised and the valve member 60 returns to its seat to cut-off the flow of ingredient to the container.

This sequence of operations may be repeated until the upper level of the ingredients passes below the level of light path 25 whereupon light from LED 22 is received by phototransistor 24. At this stage the phototransistor 24 activates the phototransistor 24 to cause a signal through a control circuit to provide an indication on a control board that the particular ingredient is "sold out".

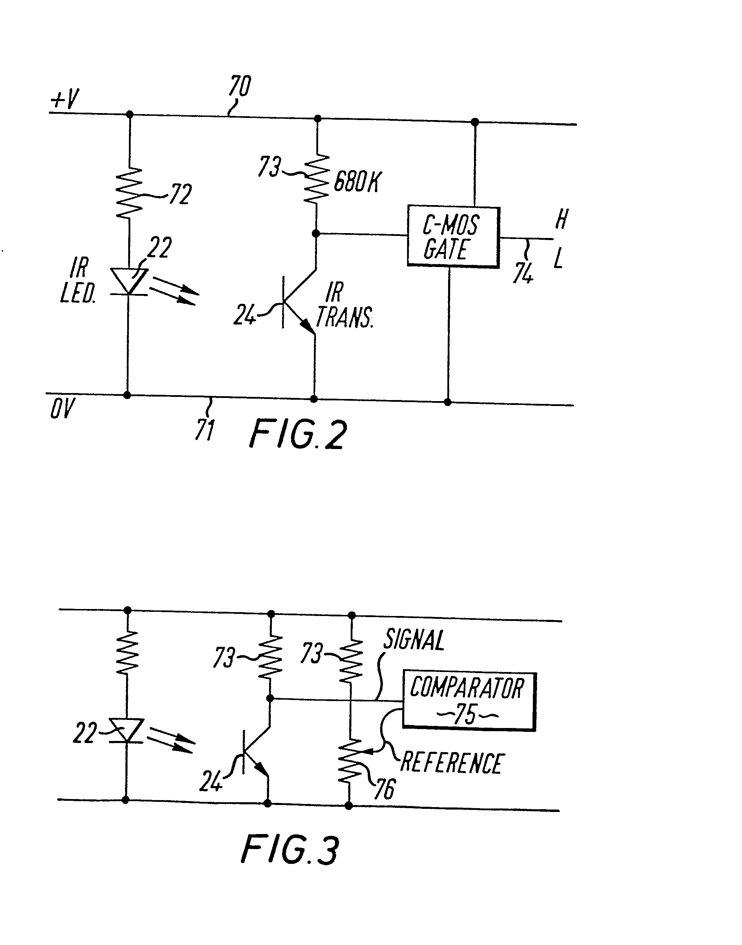

A typical circuit is shown diagrammatically in Figure 2. A positive voltage supply is provided by line 70 and a second line 71 is maintained at zero potential. LED 22 is connected between line 70 and 71 through balancing resistor 72. The phototransistor 24 and 680 k. resistor 73 are also connected across line 70 to 71. A C-MOS gate is connected from between the resistor 73 and the phototransistor 24 to line 71.

In operation the light from LED 22 is obturated by the ingredients disposed in the container neck and phototransistor 24 assumes a high resistance. At this stage there is a substantial voltage difference across the C-MOS/gate between the 680 k. resistor 73 and the zero potential line 71 and the C-MOS gate provides a high logic output via output 74 thus providing an indication that there still is ingredients in the container to dispense. When the level falls below light path 25 light from LED 22 is taken up by phototransistor 24 and the resistance across phototransistor 24 falls in proportion to the intensity of the light thereon until with full intensity, the resistance of phototransistor 24 becomes low. Thus, the voltage difference across the C-MOS gate between the resistor 73 and the zero potential line 71 begins to approach zero. When the voltage across the phototransistor 24 is less than a predetermined amount, say 3 volts in a 12 volt system. The C-MOS gate switches to provide a low output and an indication at a control board for the machine the particular ingredient is "sold out".

Figure 3 represents an alternative method of achieving this wherein a comparator circuit 75 is used instead of a C-MOS gate and a variable resistor 76 is used to control comparator 75. The principal of operation is exactly the same except that the variable resistor 76 is adjusted to provide the threshold for comparator 75 and provides a means whereby the comparator 75 can trigger a "sold out" signal at varying levels of light intensity falling upon photo-transistor 24. This permits the apparatus in accordance with the present invention to be used with translucent ingredients or with liquids, such, for example, as syrups whereby some light form LED 22 falls upon phototransistor 24 while ingredients remain present for dispensing, but when the ingredient level falls below the light path 25 the increased intensity of light falling on phototransistor 24 will cause the voltage to change below the reference level given by variable resistor 76 with a result that comparator will indicate a "sold out" signal.

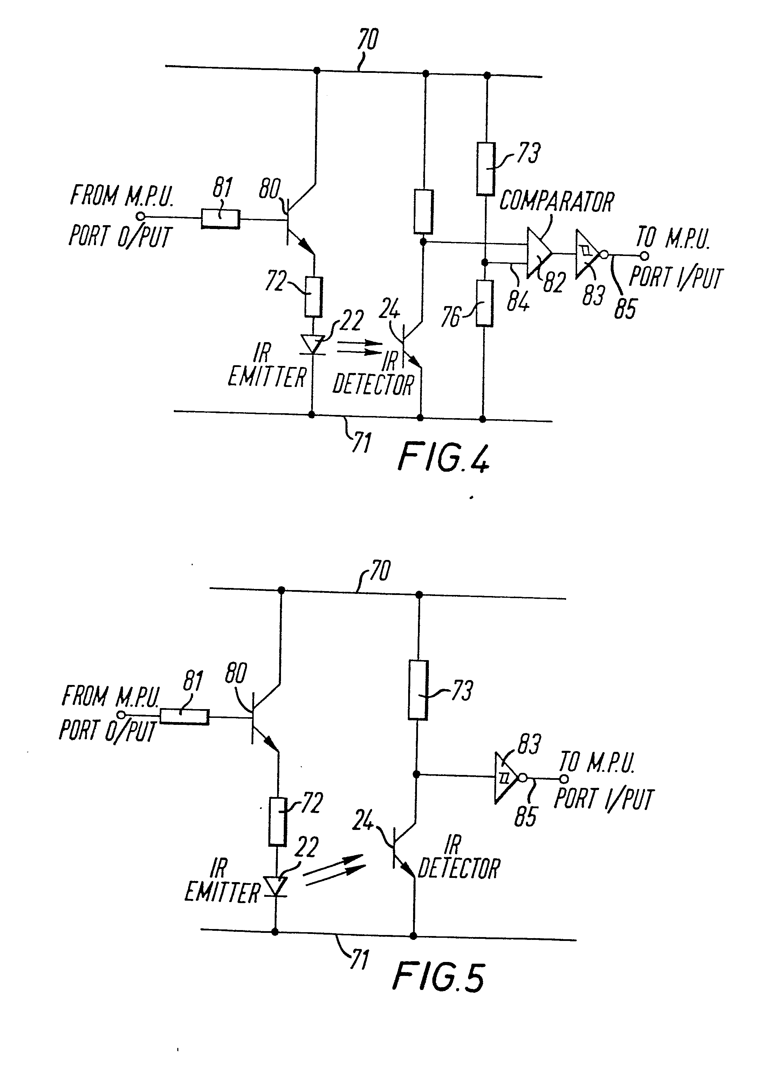

In the embodiment illustrate in Figure 4, a diode 80 is disposed between the current supply 70 and the zero potential line 71, the diode 80 feeding infra red emitter 22 via a resistor 72. A supplementary resistor 81 may be interposed into the grid of diode 80. A wheat stone Bridge arrangement is provided via infra red detector 24 to comparator 82 which feeds a Nan Schmitt trigger circuit 83. Comparison resistors 73 and 76 are adjusted to give the correct reference potential in line 84 feeding comparator 82 and a signal from infra red emitter 22 is received by detector 24 which changes the resistance thereof. If the resistance change is above the given level the comparator 82 provides a pulse to Schmitt trigger 83 which gives a high on output line 85 while if the resistance of detector 24 is high then the comparator will indicate an output to Schmitt trigger 83 which gives a low on trigger output 85.

The diode 80 is pulsed from a microprocessor unit (not shown) with a ten micro second pulse which enables diode 80 to pulse emitter 22 to provide a pulse for detection by infra red detector 24 which provides the appropriate signal from Nan Schmitt trigger 83 whereby in the event of light being received by the detector,
i.e. a "Sold Out" condition the output 85 from Schmitt
trigger circuit 83 is high.

A similar situation arises with respect to diagrams
illustrated in Figure 5. A similar situation arises
with respect to diagrams illustrated in Figure 5. Again
the input to a diode 80 is feed via a resistor 81 and is
pulsed from a microprocessor unit. The pulse applied
to the diode 80 enables the diode to provide a
corresponding pulse to the infra red emitter 22. In
the event of there being no ingredient present the
infra red detector 24 is enabled to allow the passage
of current, with a corresponding drop potential across
Schmitt trigger 83 which then provides a high output on
line 85 back to the micro processor unit, thereby
indicating a "Sold Out" condition and at the same time,
disenabling the conveyor control circuit in respect
of that particular ingredient.

The apparatus described above provides a facile
and ready method of indicating the availability of
ingredients to a consumer and indicating the need to
change ingredients in a vending machine. The device is
self regulating and is reset automatically by the
insertion of a filled container.

0010448

CLAIMS:

1.    A vending machine of the kind described comprising
a holder for supporting a container of ingredients to
be dispensed, valve actuator means carried by said
holder and juxtaposed the container valve means for
actuation thereof in response to a dispense signal,
a light source carried by the holder upwardly of said
valve actuating means, a photoelectric cell carried by
said holder and adapted to receive light from said cell
to define a light path adapted to be obturated by
ingredients of the container whereby when the container
is substantially empty, the intensity of the light from
the light surface impinging on the photoelectric cell
increases to indicate that all the ingredient has been
dispensed.

2.    A vending machine as claimed in claim 1 wherein
the output of said light source is continuous.

3.    A vending machine as claimed in claim 1 wherein
the output from said light source is pulsed to provide
pulses of light at periodic intervals.

4.    A machine as claimed in any one of the preceding
claims when the light source is a light emitting diode
and the photoelectric cell is a phototransistor.

5.    A machine as claimed in the preceding claim
wherein the light emitting diode is an infra red emitter
which is pulsed using a microprocessor unit.

6. A machine as claimed in claim 5 wherein the pulse is a ten to twenty micro second pulse applied to a diode in the emitter circuit in order to pulse the emitter.

7. A machine as claimed in claim 5 or claim 6 wherein the microprocessor unit may incorporate clock means capable of generating output and receiving input in response thereto, said output being applied to a diode before pulsing the emitter and the detector serving to prime a trigger circuit depending on the detector state.

8. A machine as claimed in any preceding claim wherein a proportion of the container released in the light path is translucent or transparent.

9. A machine as claimed in any preceding claim wherein the ingredients are opaque and the phototransistor is connected to a C-MOS gate.

10. A machine as claimed in any one of claims 1 to 8 wherein the ingredients are translucent and the phototransistor is connected to a reference circuit to effect the change of voltage therein thus indicating a variation of the light intensity impinging upon said phototransistor.

11. A machine as claimed in any preceding claim wherein the holder may comprise a solenized juxtaposed the valve member having upwardly thereof a sleeve the upper portion of which is chamfered to abut the neck of the container to support the container in its operative configuration.

12. A machine as claimed in claim 11 wherein the upwardly extending sleeve is provided with a light emitting diode in one wall adapted to direct a beam of light across the sleeve on to a diametrically opposite wall portion thereof which diametrically opposite wall portion contains a photo-transistor, thereby defining a light path across the sleeve.

13. A machine as claimed in claim 12 wherein the container is supported such that the contents rest against the valve assembly preparatory for dispensing from the dispensing nozzle, and a voltage sensing circuit so that as the level of ingredients falls below the access of the light path the intensity of the light impinging upon the phototransistor increases to produce a voltage change which is sensed by the said voltage sensing circuit.

14. A vending machine as claimed in claim 1 and substantially as hereindescribed with reference to and as illustrated in Figures 1, 2, 3 4 and 5 of the accompanying drawings.

0010448

FIG.1

FIG.2

FIG.3

0010448

FROM M.P.U.
PORT O/PUT

81

80

72

22
IR
EMITTER

24
IR
DETECTOR

70

73
COMPARATOR

82

83

85

TO M.P.U.
PORT I/PUT

76

84

71

FIG.4

FROM M.P.U.
PORT O/PUT

81

80

72

22
IR
EMITTER

24
IR
DETECTOR

70

73

83

85

TO M.P.U.
PORT I/PUT

71

FIG.5